Europäisches Patentamt

European Patent Office

Office européen des brevets

(19)

(11) Veröffentlichungsnummer: **0 320 609 B1**

## EUROPÄISCHE PATENTSCHRIFT

(12)

(45) Veröffentlichungstag der Patentschrift: **12.05.93**

(51) Int. Cl.⁵: **D21H 17/43**

(21) Anmeldenummer: **88118206.7**

(22) Anmeldetag: **02.11.88**

(54) **Anionisches Oberflächenleimungsmittel für Papier.**

(30) Priorität: **14.12.87 DE 3742330**

(43) Veröffentlichungstag der Anmeldung:
**21.06.89 Patentblatt 89/25**

(45) Bekanntmachung des Hinweises auf die
Patenterteilung:
**12.05.93 Patentblatt 93/19**

(84) Benannte Vertragsstaaten:
**AT BE DE ES FR GB IT NL SE**

(56) Entgegenhaltungen:
**DE – A – 2 510 296**

**DATABASE WPI NO73 – 57070U, Derwent Publications, London, GB; & JP – B – 52000132 (ASADA CHEMICAL) 05 – 01 – 77 & JP – A – 48044508**

(73) Patentinhaber: **Giulini Chemie GmbH
Giulinistrasse 2 Postfach 150 480
W – 6700 Ludwigshafen/Rhein(DE)**

(72) Erfinder: **Ulubav, Hasan, Dr.
Pfalzring 214
W – 6704 Mutterstadt(DE)**
Erfinder: **Weber, Martina
Kapellenstrasse 16
W – 5509 Reinsfeld(DE)**
Erfinder: **Bertram, Hans – Joachim
In der Hube 5
W – 5423 Braubach(DE)**
Erfinder: **Bung, Josef
Mainzer Strasse 13
W – 5703 Limburgerhof(DE)**

EP 0 320 609 B1

**Beschreibung**

Die Erfindung betrifft ein verbessertes anionisches Leimungsmittel für die Oberflächenleimung von Papier auf Basis eines Copolymerisates von langkettigen Methacryl− und acrylsäureestern und carboxylhaltigen Monomeren und gegenbenenfalls von Styrol, sowie ein Verfahren zu seiner Herstellung.

Durch den Leimungsvorgang wird bekanntlich Papier , das Flüssigkeiten kapillar aufnimmt, partiell hydrophobiert. Es gibt zwei unterschiedliche Leimungsverfahren, und zwar Masse− und Oberflächenleimung. Bei der Masseleimung werden der Stoffsuspension Leimungsmittel zugesetzt, die mit geeigneten Fällungs− und Retentionsmitteln an der Faseroberfläche fixiert werden. Dabei erhält man eine Oberfläche die gut bedruckbar und gegen das Eindringen von Wasser und wäßrigen Zubereitungen widerstandsfähig ist. Von der Masseleimung unterscheidet sich die Oberflächenleimung lediglich dadurch, daß das Leimungsmittel nachträglich auf die Papierbahn mittels geeigneter Auftragsvorrichtungen, wie Leimpressen, Rakel oder Sprühvorrichtungen, aufgebracht wird. Einzelheiten über das Leimen von Papier sind dem Fachmann bekannt und der einschlägigen Literatur zu entnehmen.

Im Handel sind eine Vielzahl von anionischen Oberflächenleimungsmitteln erhältlich, z.B. in Form von wässrigen Lösungen oder Dispersionen von Ammonium−oder Alkalisalzen verschiedener Copolymerisate, wie solche aus Maleinsäureanhydrid und Styrol oder Styrol und (Meth)acrylsäure.

In der US−PS 2 608 550 ist ein Oberflächenleimungsmittel beschrieben, das bei der Copolymerisation von Dicyclopentadien mit Maleinsäureanhydrid entsteht. Durch Auflösen des Copolymerisates in wässrigen NaOH−Lösungen oder Ammoniaklösungen erhält man jedoch dunkelgefärbte Harzlösungen, die stark schäumen und sich mit der Zeit zersetzen.

Das in der DE−OS 27 01 760 beschriebene Leimungsmittel, ist ein Copolymerisat, das aus Maleinsäureanhydrid und Diisobutylen besteht. Es soll zwar eine befriedigende Leimungswirkung zeigen, neigt aber unter Praxisbedingungen zu starker Schaumbildung.

In der DE−OS 25 10 296 wird ein Verfahren zur gleichzeitigen Leimung und Färbung von Papier und Pappe beschrieben. Die in diesem Verfahren zur Anwendung gelangenden Latices sind wässrige Dispersionen von feinverteilten Mischpolymerisaten mit einem K−Wert von 55 bis 130. Ein solcher Latex kann jedoch in schnellaufenden Papiermaschinen als Leimungsmittel kaum eingesetzt werden. Will man diesen Latex als Leimungsmittel einsetzen, muß er in einem Leimbad mit Ammoniak umgesetzt werden. Durch diese Umsetzung steigt die Viskosität extrem an, so daß ein Einsatz dieses in Form eines Leimbades vorliegenden Latexes in modernen Papiermaschinen nicht möglich ist.

Die Aufgabe der vorliegenden Erfindung besteht nun darin, ein Oberflächenleimungsmittel zu finden, das die vorgenannten Mängel nicht mehr aufweist. Darüberhinaus soll das neue Leimungsmittel eine verbesserte Leimungswirkung zeigen und zwar sowohl bei Papiersorten, die durch Neutralleimung, als auch bei solchen, die mit Aluminiumsalzen hergestellt worden sind. Es sollten weiterhin geeignete Polymerisationsbedingungen gefunden werden zur Polymerisation der erfindungsgemäßen Monomerenauswahl.

Überraschenderweise kann die gestellte Aufgabe mit einem anionischen Oberflächenleimungsmittel nach Anspruch 1 gelöst werden.

Der Carboxylgruppengehalt des Copolymeren sollte 150 bis 250 mMol Carboxylatgruppe pro 100 Gramm der Gewichtssumme der Komponenten a) bis f) betragen.

Ein Vorteil des neuen Leimungsmittels wird unter anderem darin gesehen, daß es technisch einfach herstellbar ist und kostspielige Apparaturen und Aggregate nicht erforderlich sind.

Die Copolymerisate aus den Komponenten a) bis f) werden durch radikalisch initiierte Lösungsmittelpolymerisation hergestellt. Um das Copolymerisat gemäß Erfindung zu erhalten, werden zweckmäßigerweise die einzelnen Komponenten in einem mit Wasser mischbaren organischen Lösungsmittel einer radikalisch initiierten Lösungsmittelpolymerisation unterworfen.Als mit Wasser mischbare organische Lösungsmittel können die niederen Alkohole, wie Methanol, Ethanol, Propanol und i−Propanol und Aceton eingesezt werden. Isopropylalkohol hat sich als besonders geeignet erwiesen. Andere mit Wasser mischbare organische Lösungsmittel können selbstverständlich auch eingesetzt werden. Die radikalisch initiierte Lösungsmittelpolymerisation wird gemäß Stand der Technik unter Zuhilfenahme von bekannten Initiatoren, die in Radikale zerfallen, z.B. Azobisisobutyronitril, Dibenzoylperoxid, Dilauryloxid durchgeführt. Man verwendet die Initiatoren in Mengen von 0,05 bis 2,0 Gew.−%, bezogen auf die Gewichtssumme der Monomeren. Auch Mischungen von Polymerisationsinitiatoren können eingesetzt werden.

Die Komponenten a) bis f) sind im Handel erhältliche Produkte, die gemäß ihrer Spezifikation in der üblicher Handhabung eingesetzt werden können.

Die Copolymerisation wird in einem Reaktor mit Rührwerk durchgeführt, in den die Komponenten a) bis f) unter Rühren bei Zimmertemperatur eingetragen werden. Danach wird der Initiator zugesetzt, das Reaktionsgefäß mit Stickstoff gespült und innerhalb einer halben Stunde auf 80˚ C aufgeheizt. Unter Konstanthaltung dieser Temperatur ist die Reaktion nach 2 Stunden beendet. Die Rührgeschwindigkeit sollte im Mittel 130 bis 180 U/Min betragen. Um das Copolymerisat, welches noch freie Carboxylgruppen enthält, wasserlöslich zu machen, überführt man es mit Basen in seine Salze. Hierfür kommen vor allem Ammoniumionen in Form von wässriger Ammoniaklösung (25 Gew. − %) in Frage. Weiterhin ist der Einsatz von einem Alkanolamin z.B. Monoethanolamin, Diethanolamin und Disopropanolamin, bevorzugt Triethano − lamnin, möglich. Die Neutralisation kann auch sehr gut mit Alkalihydroxid, insbesondere mit einer Mischung, bestehend aus einem Alkanolaminen und Alkalihydroxid, erfolgen. Mischungen aus Triethanolamin und Natriumhydroxid sind besonders gegeignet. Nach erfolgter Neutralisation wird nun Wasser langsam und kontinuierlich zugegeben. Auf diese Weise erhält man eine dünnflüssige, kolloidale Lösung des Copoly − merisates, die in dieser Form als Oberflächenleimungsmittel für Papier eingesetzt wird. Das neue Lei − mungsmittel weist eine ausgezeichnete Leimungswirkung auf. Sie ist unabhängig von der Art der Fertigung des Rohpapiers (saure oder neutrale Fahrweise), wird jedoch bei Papieren, die im sauerem Bereich hergestellt worden sind, d.h. bei Anwesenheit von Aluminiumverbindungen im Papier, im besonders hohen Maße verstärkt. Eine ähnliche Wirkungssteigerung kann erzielt werden, wenn bei der Papierleimung stark kationische Polyelektrolyte anwesend sind. Die wässerige kolloidale Lösung gemäß der Erfindung kann bis zu 10 Gew. − % ein mit Wasser mischbares organisches Lösungsmittel enthalten.

Das neue Leimungsmittel ist aufgrund seiner niedrigen Viskosität und der guten Verdünnbarkeit mit Wasser sehr gut zu handhaben. Die Viskosität wird mit einem Viskosimeter nach Brookfield mit einer Spindel 1 und einer Drehzahl 100/Min. gemessen. Die Rheologie der Stärkeflotte bleibt unbeeinflußt. Aus diesem Grund kann das neue Produkt auch in schnellaufenden Papiermaschinen mit Vorteil eingesetzt werden. Die hier herausgestellte gute Stärke − und Elektrolytstabilität des erfindungsgemäßen Leimungs − mittels verhindert Ausfällungen und dadurch bedingte Ablagerungen auf den Walzen der Leimpresse, wodurch Störungen des Produktionsablaufs verhindert werden.

Der Feststoffgehalt des erfindungsgemäßen Oberflächenleimungsmittels sollte bei 5 bis 30 Gew.%, bezogen auf das Salz des Copolymeren, liegen. Vorteilhafterweise beträgt er 10 bis 20 Gew. % .

Der Gegenstand der vorliegenden Erfindung wird durch die nachfolgenden Beispiele näher erläutert. Zu den dort genannten Meßverfahren werden noch folgende Hinweise gegeben:

1) Der Leimungsgrad gegen Tinte wird bestimmt mit einem Leimungsgradprüfer

Gemessen wird die Zeit in Sekunden, die bis zum Remissionsabfall auf 50 % des Remissionswertes des zu prüfenden Papiers nach Kontakt mit der Prüftinte, vergeht.

Prüftinte: Papier − Prüftinte, blau, nach DIN 53126.

2) Cobb − Test: DIN − Norm 53132 − 1 Minute.

Bei diesem Test wird die Wasseraufnahme nach dem Kontakt des Papiers mit destilliertem Wasser in einer bestimmten Zeiteinheit (z.B. 1 Minute) in Gramm pro Quadratmeter bestimmt. Je niedriger der Cobb − Wert, desto besser ist die Leimungswirkung.

**Beispiel 1:**

Es wird in einem 500 ml fassenden und extern beheizbaren Doppelmantelkolben mit Rückflußkühler, Blasenzähler, Thermometer und Rührwerk gearbeitet. Zu Beginn werden folgende Komponenten in ange − gebener Reihenfolge bei Zimmertemperatur und unter Rühren eingetragen: 20,0 g Isopropanol ,14,1 g Dimethylaminoethylacrylat (0,09 Mol),14,6 g Methacrylsäure (0,17 Mol),16,6 g Styrol,(0,16 Mol)9,6 g Methacrylsäureester eines C10 − Fettalkohols (0,042 Mol) und 9,6 g Methylmethacrylat (0,10 Mol). An − schließend wird das Monomerengemisch mit 0,69 g Azobisisobutyronitril, aufgeschlämmt in 4 g Isopropan − ol, versetzt und das Reaktionsgefäß 10 Minunten mit Stickstoffstrom gespült. Danach wird auf 80˚C innerhalb 30 Min. aufgeheizt. Die Rührgeschwindigkeit sollte im Mittel zwischen 130 − 180 U/Minute betragen Nach 2 Stunden ist die Polymerisation beendet.Zur Salzbildung werden 39 g 25 Vol.% − iges Ammoniakwasser mittels Tropftrichter zugegeben. Nach einer Nachrührdauer von 15 Min wird mit 372 g Wasser verdünnt von 75˚ C. Die Wasserzugabe erfolgt langsam und kontinuierlich. Es ensteht eine schwach opaleszierende dünnflüssige, kolloidale Lösung eines anionischen Leimungsmittels mit einem Feststoffgehalt von ca 13,0 Gew. %.

Bei der in Tabelle 1 angegebenen Beispielen 2 bis 6 wird analog dem Beispiel 1 gearbeitet.

**Tabelle 1**

| Beispiel | 2 | 3 | 4 | 5 | 6 |
|---|---|---|---|---|---|
| Komponente (gr.) | | | | | |
| Isopropanol | 35 | 35 | 35 | 35 | 35 |
| Isobutylmethacrylat | 20 | - | - | - | - |
| Methylmethacrylat | - | 17,5 | 14 | 14 | 14 |
| C10-Methacrylat | - | 14 | 14 | - | - |
| C16-C18 Methacrylat | 14 | - | - | 15 | 14 |
| N,N-Dimethylaminoethyl- methacrylat | 21 | 21 | 21 | 17,5 | 17,5 |
| Methacrylsäure | 12 | 12 | 12 | 12 | 12 |
| Styrol | 14 | 14,5 | 14 | 14 | 14 |
| Azobisisobutyronitril | | | | | |
| 25 %-ige wässrige Ammoniaklösung | 36,50 | 36,50 | 36,50 | 36,50 | - |
| Triethanolamin | - | - | - | - | 20,9 |
| Wasser demineral. | 485 | 467 | 434 | 410 | 450 |
| Feststoffgehalt Gew.% | 13 | 13 | 13 | 13 | 16 |
| mMol COO⁻ /100g Copolymer | 172 | 177 | 186 | 197 | 195 |
| Viskosität (mPa s) | 20 | 40 | 35 | 20 | 15 |
| Aussehen | opalesc. | opalesc. | fast klar | opalesc. | gelblich,klar |

**Leimungsversuche**

**Beispiel 7**

Ein ungeleimtes, Aluminiumsulfat enthaltendes Rohpapier mit einem Flächengewicht von 50 g/m², hergestellt aus 70 Gew.% Altpapier und 30 Gew.% Holzschliff, wird in einer Laborleimpresse mit einer Leimflotte behandelt, die 5 Gew. % enzymatisch abgebaute Weizenstärke und pro Liter Stärkelösung 10 g

4

Leimungsmittel, hergestellt nach Beispiel 4 bzw. 5, enthält. Die Temperatur der Leimflotte beträgt 60° C. Die Aufnahme an Trockensubstanz des Papiers in der Leimpresse beträgt 4,4 Gew.%. Nach der Behandlung in der Leimpresse wird das imprägnierte Papier 2 Minuten auf einem Fototrockner getrocknet.

Unter gleichen Bedingungen wird eine Oberflächenleimung mit einem handelsüblichen anionischen Leimungsmittel auf Basis eines Copolymeren aus Diisobutylen und Maleinsäureanhydrid mit einem Feststoffgehalt von 24 Gew.% durchgeführt. Die bei der anwendungstechnischen Prüfung am Papier ermittelten Werte sind in Tabelle 2 zusammengefaßt.

Tabelle 2

|  | Handelsprodukt 24 Gew.%−ig | Copolymerlösung nach Beisp. 4 13,0 Gew.%−ig | Copolymerlösung nach Beisp. 5 13 Gew.%−ig |
|---|---|---|---|
| Leimungsgrad (sec) | 365 | 485 | 850 |
| Cobb−Wert (Wasser,1 Minute) | 17 | 17 | 15 |

Aus dieser Tabelle ist deutlich zu erkennen, daß mit den erfindungsgemäßen Leimungsmitteln trotz wesentlich geringeren Feststoffanteils eine deutlich bessere Leimung erzielt wird.

**Beispiel 8**

Ein neutrales, ungeleimtes Rohpapier mit einem Flächengewicht von 50 g/cm$^2$, hergestellt aus 100 % gelblichem Nadelholz−Sulfatzellstoff wird in der in Beispiel 7 erwähnten Laborpresse mit einer Leimflotte, die 5 Gew. % enzymatisch abgebaute Weizenstärke und 0,075 Gew.% bzw. 0,10 Gew.% Leimungsmittel, bezogen auf Trockensubstanz, hergestellt nach Beispiel 5 bzw. 6, enthält. Die Aufnahme des Papiers an Trockensubstanz beträgt 4,6 %. Danach wird wie in Beispiel 7 verfahren.

Dieser Versuch soll die verbesserte Leimungswirkung bei gleichem Polymeranteil im Papier noch deutlicher heraustellen. Die am Papier gemessenen Werte sind in Tabelle 3 zusammengestellt.

```
Tabelle 3

   -------------------------------------------------------------------

                          Leimungsmittel    Leimungsmittel

            Handelsprodukt   nach Beispiel 5    nach Beispiel 6

   -------------------------------------------------------------------

Einsatzmenge 0,075    0,10        0.075     0,10     0,075     0,10

Gew. %(atro+)

Leimungsgrad 27       44          550       760      200       340

Cobb-Wert     44      34          25        23       29        24

(Wasser,

1 Minute)

+atro = absolut trocken
```

**Patentansprüche**

1. Anionisches Oberflächenleimungsmittel für Papier in Form einer wässerigen kolloidalen Lösung des Salzes eines Copolymeren, das aus dem Monomeren a) und b)

a) 10 bis 30 Gew. − % (Meth) − Acrylsäure

b) 5 bis 30 Gew. − % (Meth) − Acrylsäureester eines (C10 bis C22) − Fettalkohols

besteht, dadurch gekennzeichnet daß es auch noch die Monomeren c) bis f ) enthält

c) 0 bis 30 Gew. − % Styrol

d) 0 bis 30 Gew. − % N, N − Dimethylaminoethylacrylat oder − methacrylat

e) 0 bis 40 Gew. % Methyl − (meth) − acrylat

f) 0 bis 40 Gew. % Isobutyl − (meth)acrylat

wobei die Summe der Komponenten a) bis f) stets 100 % beträgt.

2. Anionisches Oberflächenleimungsmitttel nach Anspruch 1, dadurch gekennzeichnet, daß der Carboxyl − gruppengehalt des Copolymeren 150 bis 250 mMol COO⁻ pro 100 Gramm der Gewichtssumme der Komponenten a) bis f) beträgt.

3. Anionisches Oberflächenleimungsmittel nach den Ansprüchen 1 bis 2, dadurch gekennzeichnet, daß das Salz des Copolymeren ein Alkali −, Ammonium −, Amin oder Alkanolaminsalz ist.

4. Anionisches Oberflächenleimungsmittel nach den Ansprüchen 1 bis 3, dadurch gekennzeichnet, daß der Feststoffgehalt bezogen auf das Salz des Copolymeren in der wässerigen kolloidalen Lösung 5 bis 30 Gew. − %, vorzugsweise 10 bis 20 Gew. − %,beträgt.

5. Anionisches Oberflächenleimungsmittel nach den Ansprüchen 1 bis 4, dadurch gekennzeichnet, daß die wässerige kolloidale Lösung bis zu 10 Gew. − % ein mit Wasser mischbares organisches Lösungsmittel enthält.

6. Verfahren zur Herstellung des anionischen Oberflächenleimungsmittels nach den Ansprüchen 1 bis 5, dadurch gekennzeichnet, daß die Komponenten a) bis f) in einem mit Wasser mischbaren organischen Lösungsmittel radikalisch polymerisiert werden, das Copolymere mit einer Base neutralisiert und mit Wasser kolloidal dispergiert wird.

7. Verfahren nach Anspruch 6, dadurch gekennzeichnet, daß als mit Wasser mischbares Lösungsmittel Isopropanol eingesetzt wird.

8. Verfahren nach den Ansprüchen 6 und 7 dadurch gekennzeichnet, daß das Copolymere mit einer wässerigen Ammoniaklösung neutralisiert wird.

**Claims**

1. An anionic paper surface sizing agent in the form of an aqueous colloidal solution of the salt of a copolymer, comprising monomers a) and b)

a) 10 to 30 wt.% of (meth)acrylic acid

b) 5 to 30 wt.% of (meth)acrylic acid ester of a (C10 to C22) fatty alcohol,

characterised in that it also contains the monomers c) to f)

c) 0 to 30 wt.% of styrene

d) 0 to 30 wt.% of N, N − dimethylaminoethylacrylate or − methacrylate

e) 0 to 40 wt.% of methyl(meth)acrylate

f) 0 to 40 wt.% of isobutyl(meth)acrylate,

whereby the sum of the components a) to f) always totals 100%.

2. An anionic surface sizing agent according to claim 1, characterised in that the amount of the carboxyl group in the copolymer is 150 to 250 mMol COO⁻ per 100 gram of the total weight of the components a) to f).

3. An anionic surface sizing agent according to claims 1 to 2, characterised in that the salt of the copolymer is an alkali, ammonium, amine or alkanolamine salt.

4. An anionic surface sizing agent according to claims 1 to 3, characterised in that the solids content in the aqueous colloidal solution amounts to 5 to 30 wt.%, preferably 10 to 20 wt.%, based on the salt of the copolymer.

5. An anionic surface sizing agent according to claims 1 to 4, characterised in that the aqueous colloidal solution contains, in an amount up to 10 wt.%, an organic solvent miscible with water.

6. A method for preparing the anionic surface sizing agent according to claims 1 to 5, characterised in that the components a) to f) are radically polymerised in an organic solvent miscible with water, that the copolymer is neutralised by means of a base and dispersed colloidally with water.

7. A method according to claim 6, characterised in that isopropanol is used as solvent miscible with water.

8. A process according to claims 6 and 7,
characterised in that the copolymer is neutralised with an aqueous ammoniacal solution.

**Revendications**

1. Agent anionique de collage en surface pour papier, sous forme d'une solution colloïdale aqueuse d'un sel d'un copolymère composé des monomères a) et b)
a) 10 à 30 % en poids d'acide (méth)acrylique
b) 5 à 30 % en poids d'ester d'acide (méth)acrylique d'un alcool gras en $C_{10}$ à $C_{22}$,
caractérisé en ce qu'il contient également les monomères c) à f)
c) 0 à 30 % en poids de styrène
d) 0 à 30 % en poids d'acrylate ou méthacrylate de N,N−diméthylaminoéthyle
e) 0 à 40 % en poids de (méth)−acrylate de méthyle
f) 0 à 40 % en poids de (méth)−acrylate d'isobutyle,
la somme des composants a) à f) étant toujours égale à 100%.

2. Agent anionique de collage en surface selon la revendication 1, caractérisé en ce que la teneur du copolymère en groupes carboxyle est de 150 à 250 mmol COO par 100 grammes du poids total des composants a) à f).

3. Agent anionique de collage en surface selon l'une des revendications 1 à 2, caractérisé en ce que le sel du copolymère est un sel de métal alcalin, un sel d'ammonium, un sel d'amine ou un sel d'alcanolamine.

4. Agent anionique de collage en surface selon les revendications 1 à 3, caractérisé en ce que la teneur en substances solides par rapport au sel du copolymère dans la solution aqueuse colloïdale est de 5 à 30 % en poids, de préférence de 10 à 20 % en poids.

5. Agent anionique de collage en surface selon les revendications 1 à 4, caractérisé en ce que la solution colloïdale aqueuse contient jusqu'à 10 % en poids d'un solvant organique miscible avec l'eau.

6. Procédé pour fabriquer l'agent anionique de collage en surface selon les revendications 1 à 5, caractérisé en ce que les composants a) à f) sont soumis à une polymérisation radicalaire dans un solvant organique miscible avec l'eau, et que le copolymère est neutralisé avec une base et mis en dispersion colloïdale aqueuse.

7. Procédé selon la revendication 6, caractérisé en ce que l'on utilise de l'isopropanol comme solvant miscible avec l'eau.

8. Procédé selon les revendications 6 et 7, caractérisé en ce que le copolymère est neutralisé avec une solution aqueuse d'ammoniaque.